# EUROPÄISCHE PATENTSCHRIFT

(11) **EP 1 213 205 B1**
(45) Veröffentlichungstag und Bekanntmachung des Hinweises auf die Patenterteilung: **29.09.2004**
(21) Anmeldenummer: 01117091.7
(22) Anmeldetag: 13.07.2001
(51) Int. Cl.: B62D 5/30, B62D 6/00

(54) **Fremdkraft-Lenkeinrichtung**
Power steering device
Dispositif de direction actionné par force extérieure

(30) Priorität: 07.12.2000 DE 10060832
(43) Veröffentlichungstag der Anmeldung: 12.06.2002
(73) Patentinhaber: ZF Lenksysteme GmbH, 73527 Schwäbisch Gmünd (DE)
(72) Erfinder: Dominke, Peter, 74321 Bietigheim-Bissingen (DE); Leimbach, Klaus-Dieter, Dr., 73569 Eschach (DE); Kogel, Walter, 73453 Abtsgmünd (DE)

(56) Entgegenhaltungen:
- DE-A- 2 410 489
- DE-A- 19 838 490
- DE-A- 19 840 625

## Beschreibung

Bei Fremdkraft-Lenkeinrichtungen werden die Lenkkräfte ausschließlich von einer oder mehreren Energieversorgungsanlagen erzeugt. Dadurch kann auf eine mechanische Verbindung von einem Lenkrad zu einem gelenkten Fahrzeugrad verzichtet werden.

Die Erfindung geht von der Gattung aus, wie im unabhängigen Anspruch 1 angegeben und in DE 2410489 A1 beschrieben. Bei einer in DE 19840625A beschriebenen Lenkeinrichtung ist ein hydraulisches Steuerventil vorgesehen, das von einem Elektromotor gesteuert ist und seinerseits einen hydraulischen Lenksteller steuert. Dabei ist kein Lenkgetriebe vorgesehen und dementsprechend hat der Elektromotor keinen mechanischen Durchgriff auf ein Lenkgetriebe. Diese bekannte Lenkeinrichtung ist eine Weiterentwicklung einer Servolenkung nach der DE 195 41 752 A1 mit dem Ziel, durch den Einsatz eines Untersetzungsgetriebes einen kleineren Elektromotor einsetzen zu können.

Bekannt ist ferner aus der DE 41 41 406 A1 eine elektrohydraulische Stelleinrichtung zum Betätigen der Hinterrad-Lenkung eines Kraftfahrzeuges, wobei ebenfalls ein Untersetzungsgetriebe zwischen einem Elektromotor und einem Steuerventil vorgesehen ist. Dabei ist zwar ein mechanischer Durchgriff von dem Elektromotor auf ein Lenkgetriebe vorgesehen, aber auch eine Blockierung sowohl der mechanischen als auch der hydraulischen Lenkfunktionen im Störfall. Es ist also keine Rückfallebene vorgesehen, in der im Störfall ein Notbetrieb mit ausreichender Funktionalität aufrecht erhalten werden kann. Bei dem Stand der Technik handelt es sich um eine Weiterentwicklung einer Einrichtung nach der DE 35 20 225 A1 mit dem Ziel, eine gewisse Selbsthemmung des Untersetzungsgetriebes zu erreichen und die Lenkung der Hinterräder im Störfall zu blockieren.

### Vorteile der Erfindung

Durch den Anmeldungsgegenstand mit den Merkmalen des Anspruches 1 ist eine Lenkeinrichtung geschaffen, die nach dem Steer-By-Wire-Prinzip auch für den Einsatz als Vorderradlenkung geeignet ist und dabei die Sicherheitsanforderungen erfüllt, weil im Störfall ein Notbetrieb gewährleistet ist.
Der Elektromotor und das Untersetzungsgetriebe sind nämlich derart dimensioniert, dass sie bei Ausfall der hydraulischen Lenkfunktion die gesetzlich vorgeschriebene Mindestlenkleistung erbringen können.

Vorteilhafte Weiterbildungen der Erfindung sind in den abhängigen Ansprüchen angegeben, deren Merkmale auch, soweit sinnvoll, miteinander kombiniert werden können.

### Zeichnungen

Ein Ausführungsbeispiel der Erfindung ist in den Zeichnungen dargestellt und im Folgenden näher erläutert.
Schematisch ist gezeigt in
- Figur 1:: eine Übersichtsskizze einer erfindungsgemäßen Fremdkraft-Lenkeinrichtung,
- Figur 2:: ein Prinzip-Blockschaltbild eines Regelkreises für eine erfindungsgemäße Fremdkraft-Lenkeinrichtung,
- Figur 3:: eine Detaildarstellung eines Lenkstellers, wie in Figur 1 enthalten.

Im Wesentlichen gleiche Teile in unterschiedlichen Figuren sind mit gleichen Bezugszeichen versehen.

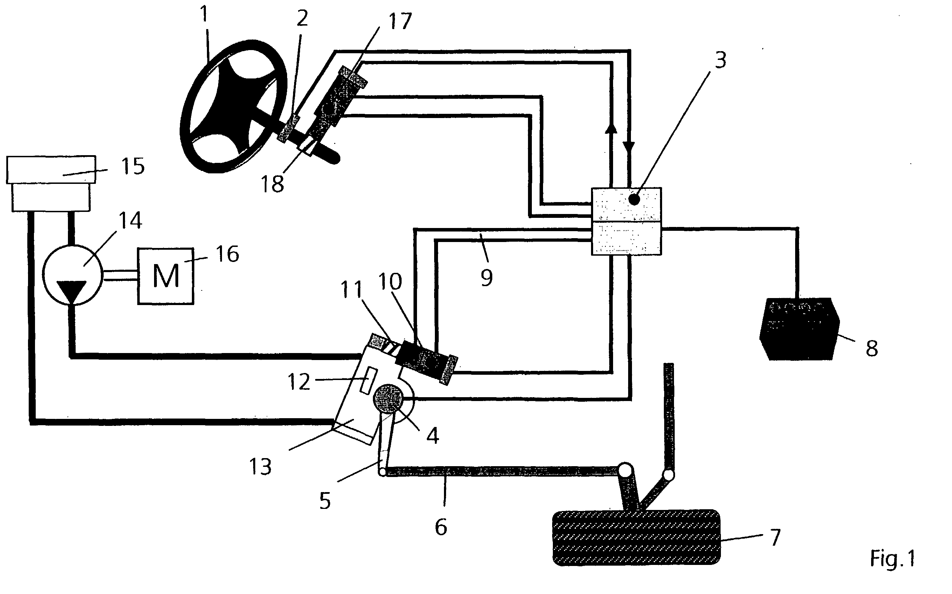

In Figur 1 ist zunächst an der Lenksäule der Lenkhandhabe 1 ein Sollwertsensor 2 für den vorgegebenen Lenkwinkel angeordnet. Der Sollwert gelangt zu einem Steuergerät 3, in welchem ein Vergleich durchgeführt wird mit dem Istwert, der von einem Istwertsensor 4 festgestellt wird. Der Istwert repräsentiert die Stellung eines Lenkstockhebels 5, der über ein Lenkgestänge 6 wenigstens ein Fahrzeugrad 7, insbesondere ein Vorderrad lenkt.

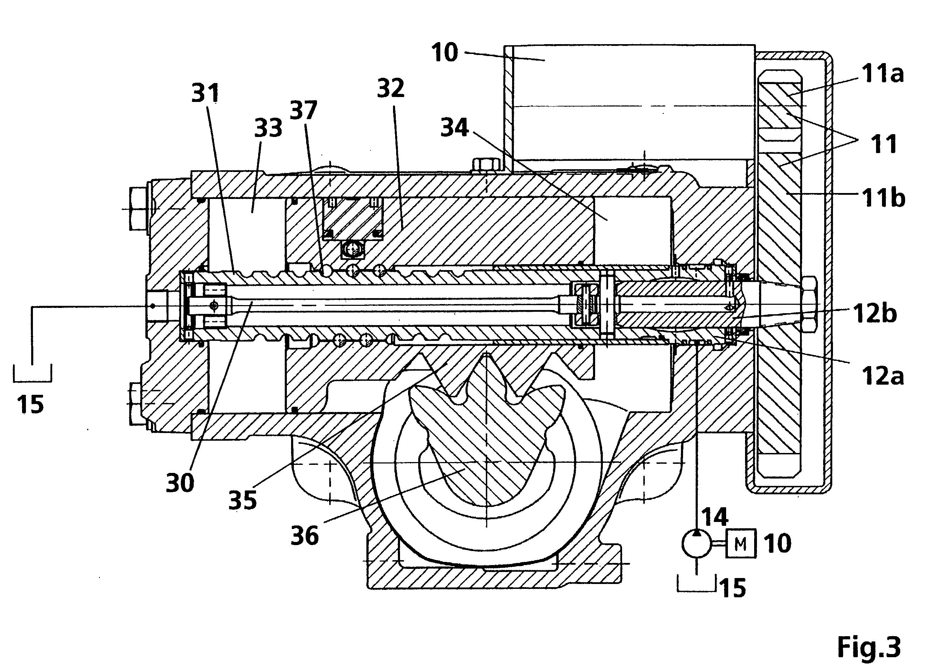

Auf der Basis des Soll/Istwert-Vergleichs steuert das von einer Batterie 8 gespeiste Steuergerät 3 über eine Steuerleitung 9 einen Elektromotor 10. Dieser wirkt über ein Untersetzungsgetriebe 11 auf zweierlei Weise auf ein Lenkgetriebe ein, das den Lenkstockhebel 5 bewegt. Zum einen erfolgt diese Einwirkung unmittelbar mechanisch (beispielsweise über ein Kugelmuttergetriebe - siehe Figur 3). Zum anderen erfolgt die Einwirkung mittelbar über ein Steuerventil 12, von dem ein hydraulischer Lenksteller 13 gesteuert wird, der über das Lenkgetriebe den Lenkstockhebel 5 bewegt.

Für den hydraulischen Lenksteller 13 und das Steuerventil 12 ist ein Ölkreislauf mit einer Pumpe 14 und einem Ölbehälter 15 vorgesehen, wobei die Pumpe 14 von einem Motor 16 angetrieben wird, bei dem es sich um den Fahrzeug- Antriebsmotor oder um einen elektrischen Hilfsmotor handeln kann.

Das Steuergerät 3 steuert auch noch einen Lenkradmomentsteller 17 in Gestalt eines Elektromotors, der direkt oder über ein Getriebe 18 ein Rückstellmoment auf die Lenksäule der Lenkhandhabe 1 überträgt.

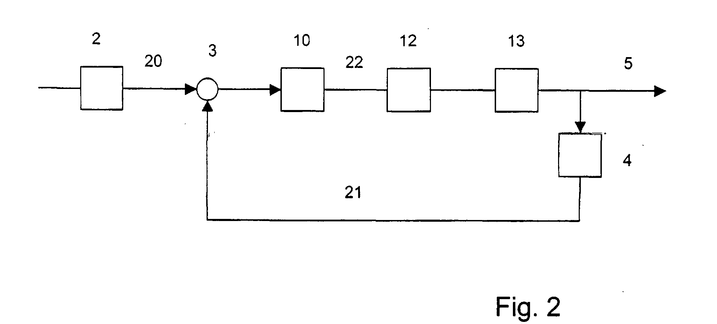

Das vergröberte Blockschaltbild nach Figur 2 veranschaulicht die Funktionsweise. Der vom Sollwertsensor 2 kommende Sollwert 20 wird im Steuergerät 3 mit dem Istwert 21 verglichen, der vom Istwertsensor 4 geliefert wird und die Stellung des Lenkstockhebels 5 wiedergibt. In der vom Steuergerät 3 ausgehenden Regelstrecke befindet sich der Elektromotor 10, der ein Drehmoment 22 auf das Steuerventil 12 abgibt, welches den Lenksteller 13 steuert.

In Figur 3 ist eine Baueinheit detaillierter dargestellt, welche den Elektromotor 10, das Untersetzungsgetriebe 11, ein Lenkgetriebe, das Steuerventil 12 mit der Steuerbüchse 12a und einen zum Steuerventil gehörenden Drehstab 13 (Torsionsstab) aufweist. Aus Sicherheitsgründen ist hinter dem Elektromotor 10 ein zweiter Elektromotor (nicht sichtbar) vorgesehen. Beide Elektromotore ersetzen einander im Störfall so weit wie möglich. Wenn sich das Ritzel 11a des Elektromotors 10 dreht, wird über das Stirnrad 11b des Untersetzungsgetriebes 11 auch der Drehschieber 12b des Steuerventils gedreht. Dieser Drehschieber 12b ist starr mit dem rechten Ende des Drehstabes 13 verbunden. Die Drehbewegung des Drehschiebers 12b wird über den Drehstab 30 zu dessen linkem Ende übertragen, wobei der Drehstab tordiert. Mit dem linken Ende des Drehstabes 30 ist ein Rohr 31 starr verbunden, dessen Verlängerung auf der rechten Seite die Steuerbüchse 12a bildet.

Das Rohr 31 wird von einem Kolben 32 umschlossen, von dem sich links und rechts jeweils ein Arbeitsraum 33 und 34 erstreckt, gefüllt mit Hydrauliköl. Eine Drehbewegung des Rohres 31 um dessen Längsachse hat über ein Kugelmuttergetriebe mit Kugeln 37 zur Folge, dass sich der Kolben 32 nach links oder rechts bewegt. Da der Kolben an seiner Unterseite einer Verzahnung 35 zeigt, wird eine Zahnsegmentwelle 36 gedreht, die den in Figur 1 gezeigten Lenkstockhebel 5 (nicht sichtbar) trägt.

Über das Steuerventil 12 wird Hydrauliköl entweder in den linken Arbeitsraum 33 oder in den rechten Arbeitsraum 34 geleitet, so dass der Kolben 32 nach rechts oder links gedrückt wird und über die Verzahnung 35 die Drehbewegung der Zahnsegmentwelle 36 unterstützt.

Bei einer Störung der Hydraulik-Funktion wird der Kolben 32 über das Kugelmuttergetriebe mit den Kugeln 37 rein mechanisch vom Rohr 31 angetrieben, das seinerseits über den Drehstab 12 und das Untersetzungsgetriebe 11 vom Elektromotor 11 angetrieben wird. Dann ist also diese verbleibende elektro-mechanische Arbeitsweise "Rückfallebene" für die hydraulische Funktion.

## Patentansprüche

1. Fremdkraft-Lenkeinrichtung nach dem Steer-By-Wire-Prinzip, mit einem hydraulischen Steuerventil (12) zur Steuerung eines hydraulischen Lenkstellers (13) und mit einem Elektromotor (10) zur Aufbringung des Drehmomentes, durch welches das Steuerventil (10) gesteuert wird, sowie mit einem Sollwertsensor (2) für eine Lenkhandhabe (1), welcher Sollwerte für einen Regelkreis liefert, in welchem der Lenksteller (13) in der Regelstrecke angeordnet ist, an welcher ein Istwertsensor (4) vorgesehen ist,
wobei in dem vom Elektromotor (10) ausgehenden Drehmomentübertragungsstrang zwischen Elektromotor (10) und Steuerventil (12) ein Untersetzungsgetriebe (11) angeordnet ist und der Drehmomentübertragungsstrang ständig von der Lenkhandhabe (1) mechanisch entkoppelt ist, und
• das Steuerventil (12) in dem Drehmomentübertragungsstrang zwischen dem Untersetzungsgetriebe (11) und dem hydraulischen Lenksteller (13) angeordnet ist,
**gekennzeichnet durch folgende Merkmale**:
• die über den Drehmomentübertragungsstrang ausübbare elektro-mechanische Lenkfunktion und die über das Steuerventil (12) und den Lenksteller (13) ausübbare hydraulische Lenkfunktion unterstützen einander im Normalbetrieb und sind so gesteuert, dass die elektro-mechanische Lenkfunktion im Notbetrieb als Rückfallebene für die hydraulische Lenkfunktion wirkt,
• der Elektromotor (10) und das Untersetzungsgetriebe (11) sind dem entsprechend so dimensioniert, dass sie bei Ausfall der hydraulischen Lenkfunktion in der Lage sind, eine vorgeschriebene Mindestlenkleistung zu erbringen.

2. Fremdkraft-Lenkeinrichtung nach Anspruch 1, **dadurch gekennzeichnet, dass** das Steuerventil (12) ein Drehschieberventil ist.

3. Fremdkraft-Lenkeinrichtung nach Anspruch 1 oder 2, **dadurch gekennzeichnet, dass** zusätzlich zum Elektromotor (10) ein zweiter Elektromotor vorgesehen ist.

4. Fremdkraft-Lenkeinrichtung nach einem der Ansprüche 1 bis 3, **dadurch gekennzeichnet, dass** der Lenksteller (13) zur Einwirkung auf die Vorderräder (7) eines Fahrzeugs vorgesehen ist.

## Claims

1. Power-operated steering device according to the steer-by-wire principle, with a hydraulic control valve (12) for controlling a hydraulic steering actuator (13), and with an electric motor (10) for applying the torque by means of which the control valve (12) is controlled, and also with a desired-value sensor (2) for a steering handle (1), which delivers desired values for a closed loop in which the steering actuator (13) is arranged in the controlled member on which an actual-value sensor (4) is provided, a reduction gear (11) being arranged in the torque transmission path emanating from the electric motor (10) and lying between the electric motor (10) and the control valve (12), and the torque transmission path being constantly decoupled mechanically from the steering handle (1), and the control valve (12) being arranged in the torque transmission path between the reduction gear (11) and the hydraulic steering actuator (13),
**characterized by the following features:**
• the electromechanical steering function capable of being performed via the torque transmission path and the hydraulic steering function capable of being performed via the control valve (12) and the steering actuator (13) assist one another during normal operation and are controlled in such a way that the electromechanical steering function acts as a fallback level for the hydraulic steering function during emergency operation,
• the electric motor (10) and the reduction gear (11) are correspondingly dimensioned such that; in the event of a failure of the hydraulic steering function, they are capable of furnishing a prescribed minimum steering power.

2. Power-operated steering device according to Claim 1, **characterized in that** the control valve (12) is a rotary slide valve.

3. Power-operated steering device according to Claim 1 or 2, **characterized in that** a second electric motor is provided in addition to the electric motor (10).

4. Power-operated steering device according to one of Claims 1 to 3, **characterized in that** the steering actuator (13) is provided for acting on the front wheels (7) of a vehicle.

## Revendications

1. Dispositif de direction actionné par force extérieure selon le principe de direction "steer-by-wire", comprenant une soupape de commande hydraulique (12) pour la commande d'un actionneur de direction hydraulique (13) et un moteur électrique (10) pour fournir le couple commandant la soupape de commande (12), et comprenant également un détecteur de valeur de consigne (2) pour une manette de direction (1) qui fournit des valeurs de consigne pour un circuit de réglage, dans lequel l'actionneur de direction (13) est disposé dans la section de réglage, sur laquelle est prévu un détecteur de valeur réelle (4), un réducteur (11) étant disposé dans la section de transfert de couple partant du moteur électrique (10) entre le moteur électrique (10) et la soupape de commande (12), et la section de transfert de couple étant désaccouplée mécaniquement en continu de la manette de direction (1), et
- la soupape de commande (12) étant disposée dans la section de transfert de couple entre le réducteur (11) et l'actionneur de direction hydraulique (13),
**caractérisé en ce que**
- la fonction de direction électromécanique pouvant être exercée par le biais de la section de transfert de couple et la fonction de direction hydraulique pouvant être exercée par la soupape de commande (12) et par l'actionneur de direction (13) se supportent mutuellement en mode normal et sont commandées de telle sorte que la fonction de direction électromécanique agisse en mode d'urgence sous forme de niveau de repli pour la fonction de direction hydraulique,
- le moteur électrique (10) et le réducteur (11) sont dimensionnés en conséquence de telle sorte qu'ils soient en mesure, dans le cas d'une panne de la fonction de direction hydraulique, d'assurer une performance de direction minimale prescrite.

2. Dispositif de direction actionné par force extérieure selon la revendication 1, **caractérisé en ce que** la soupape de commande (12) est une soupape à tiroir rotatif.

3. Dispositif de direction actionné par force extérieure selon la revendication 1 ou 2, **caractérisé en ce que** l'on prévoit en plus du moteur électrique (10) un deuxième moteur électrique.

4. Dispositif de direction actionné par force extérieure selon l'une quelconque des revendications 1 à 3, **caractérisé en ce que** l'actionneur de direction (13) est prévu pour agir sur les roues avant (7) d'un véhicule.
